# EUROPEAN PATENT SPECIFICATION

(11) **EP 0 966 749 B1**
(45) Date of publication and mention of the grant of the patent: **31.05.2006**
(21) Application number: 99901436.8
(22) Date of filing: 11.01.1999
(51) Int. Cl.: H01H 71/12, H01H 71/08

(54) **CIRCUIT BREAKER HAVING HALL EFFECT SENSORS**
SCHUTZSCHALTER MIT HALLEFFEKTSENSOR
DISJONCTEUR DOTE DE DETECTEURS A EFFET HALL

(30) Priority: 14.01.1998 US 6795
(43) Date of publication of application: 29.12.1999
(73) Proprietor: GENERAL ELECTRIC COMPANY, Schenectady, NY 12345 (US)
(72) Inventor: SANTOS, Esteban, Farmington, CT 06032 (US); KIM, Edward, Eungyun, Burlington, CT 06031 (US); CRINITI, Joseph, New Britain, CT 06052 (US); LARRANAGA, Javier, Ignacio, Bristol, CT 06010 (US)
(74) Representative: Goode, Ian Roy
(86) International application number: PCT/US1999/000634
(87) International publication number: WO 1999/036928

(56) References cited:
- EP-A- 0 181 759
- FR-A- 2 682 483
- US-A- 5 083 081
- US-A- 5 162 766

## Description

### Background of the Invention

Circuit interrupters currently employed within industrial electrical distribution systems include separable contacts arranged for interrupting circuit current on command from an electronic trip unit. Current transducers such as current transformers as described within US Patent 4,672,501 entitled "Circuit Breaker and Protective Relay Unit" are often used to provide the trip unit with sample indication of circuit current. Such current transformers require space within the circuit breaker enclosure and increase in size with respect to the circuit breaker ampere rating. The increased size results in an increase in the size of the circuit breakers used in higher ampere-rated applications.

Hall effect devices such as described in US Patent 5,615,075 entitled "AC/DC Current Sensor for a Circuit Breaker" are much smaller in size than current transformers and allow for reduced space within the circuit breaker enclosure. Such Hall effect devices require some sort of a magnetic flux enhancer or concentrator to increase the Hall effect response at a further increase in the overall cost of the circuit breaker components.

An additional problem with use of Hall effect devices, particularly within multi-phase circuits, is the sensitivity of the Hall effect device to the magnet flux developed within adjoining phases. An overcurrent occurrence within one phase, for example, could generate substantial magnetic flux to increase the sensitivity of the Hall effect device in an immediately adjacent phase resulting in a false indication of an overcurrent occurrence in the adjacent phase.

The purpose of the invention is to describe an arrangement whereby Hall effect devices can be used with multi-pole circuit breakers without incurring cost increases over standard current transformers and without being subject to interphasal magnetic conditions.

Document FR2682483 discloses a device according to the preambles of claims 1 and 5.

### Summary of the Invention

The load lugs electrically connecting circuit breakers employing electronic trip units with associated electrical distribution circuits are shaped to provide magnetic flux concentration to Hall effect current sensors within the electronic trip unit circuit. The Hall effect sensor is positioned within the shaped region of the load lug for optimum focus of the magnetic flux within each phase and for optimum shield of the Hall effect sensor in one phase from magnetic flux generated in the adjoining phases. The shaping of the load lugs eliminates the need of additional magnetic flux concentrators as well as obviating the further need of an interphasal magnetic shield .

### Brief Description of the Drawings

Figure 1 is a top perspective view of a circuit breaker employing the flux concentration load lug and Hall effect sensor according to the invention;
Figure 2 is an enlarged top perspective view of the load lug within the circuit breaker of Figure 1;
Figure 3 is a diagrammatic representation of the flux density profile generated within the load lug upon the Hall effect sensor of Figures 1 and 2; and
Figure 4 is a diagrammatic representation of the printed circuit board carrying the conditioning circuit and trip unit circuit relative to the Hall effect sensors, contacts and current transformers contained within the circuit breaker of Figure 1.

### Description of the Preferred Embodiment

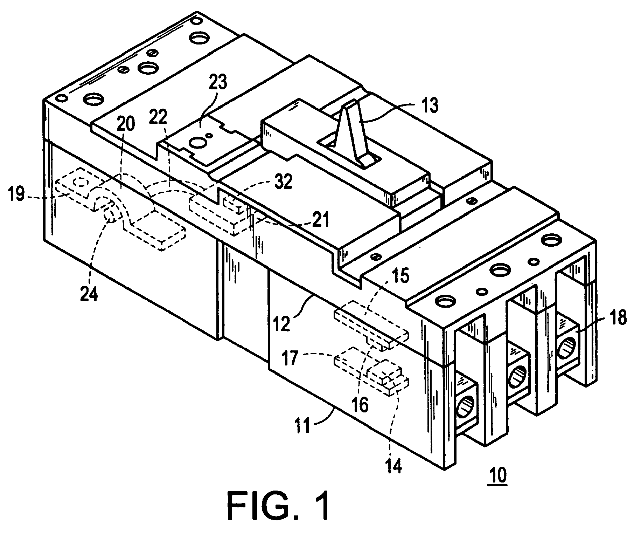

A molded case circuit breaker 10 is depicted in Figure 1 and includes a thermoset plastic case 11 to which a cover 12 of similar material is attached. A movable contact 14 on a movable contact arm 15 adjoins a fixed contact 16 on a contact support 17 for transport of circuit current between a line lug 18 and a load lug 19 within each phase of a three phase electrical distribution circuit. The ON and OFF conditions of the contacts are controlled by means of an electronic trip circuit 32 carried by a printed circuit board 21 located under the circuit breaker cover. The condition of the contacts is manually controlled by means of the operating handle 13 extending from the top surface of the cover. A rating plug 23 accessible from the top surface of the circuit breaker cover allows the ampere rating of the electronic trip circuit to be field-selectable as described in the aforementioned US Patent 4,672,501.

In accordance with the invention, the load strap 19 is shaped to form a central radial projection 20 within which the Hall effect device, hereinafter "Hall sensor" 24 is positioned. The Hall sensor is a type GH 600 obtained from F.W. Bell Co., Orlando, FL and connects with the trip circuit 32 by means of a pair of conductors, one of which is illustrated at 22, for inputting an electric signal to the trip circuit in proportion to the current flow through the load lug 19 in the manner described within the aforementioned US Patent 5,615,075.

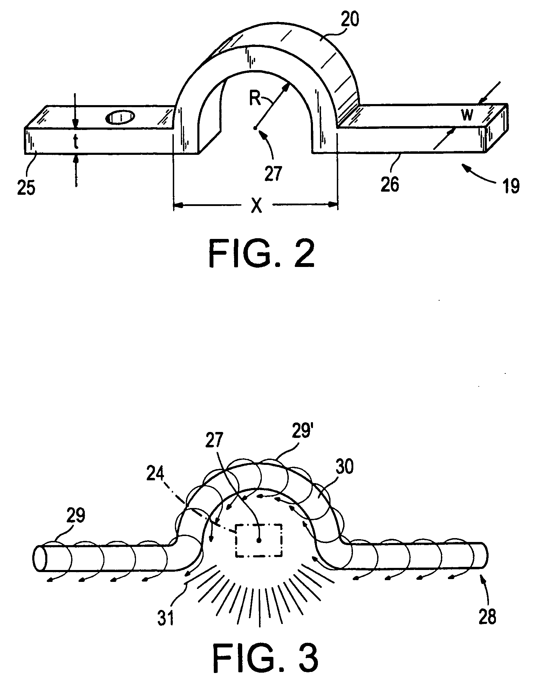

The load lug 19 is now depicted in Figure 2 to illustrate the positioning of the radial projection 20 with respect to the front 25 and rear 26 portions of the load lug. It is thus seen that the thickness t and the width w of the load lug remains constant throughout the front, rear and radial projection thereof to insure a uniform magnetic flux distribution within the linear extent x defined about the center of the radius R.

The magnetic flux lines 29 about a representative electrical conductor 28 having a defined radial extension 30 are illustrated in Figure 3 wherein the Hall sensor 24, shown in phantom, is situated within the center 27 of the radial extension. The increased magnetic flux is illustrated by the number of flux lines 29' in the vicinity of the radial extension producing the magnetic lines of force through the Hall sensor, as indicated at 31. It has been determined that not only does the magnetic flux increase within the radial extension, but the positioning of the Hall sensor within the radial extension shields and protects the Hall sensor from stray magnetic fields produced by adjacent conductors in a manner similar to that provided by a Faraday cage.

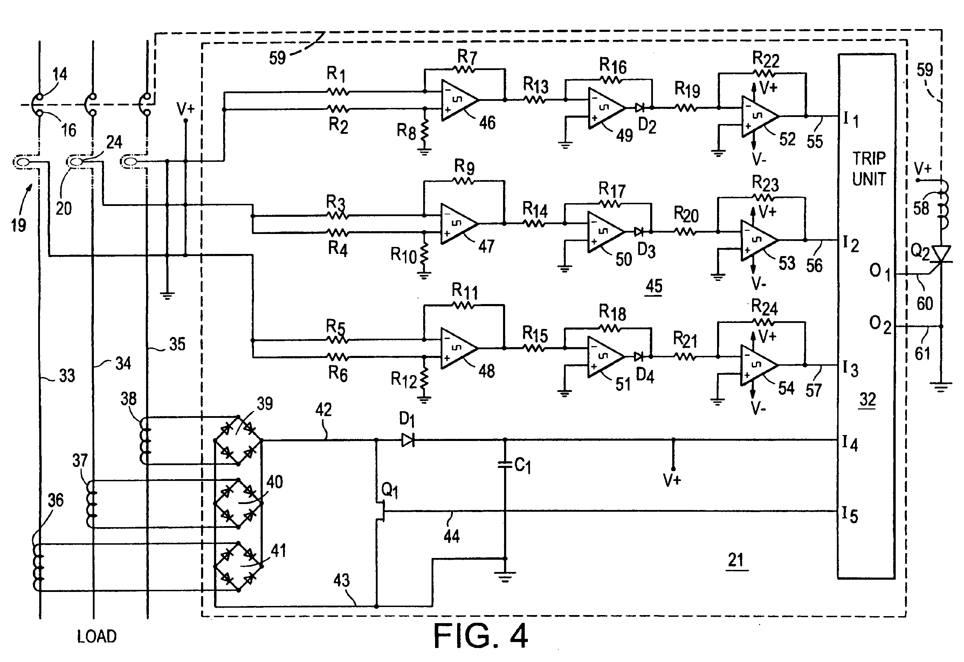

The electrical circuitry within the circuit breaker 10 of Figure 1 is shown in Figure 4 to include the printed circuit board 21 upon which the trip circuit 32 is mounted. The electric contacts 14, 16 are shown connected within a three phase electrical distribution system that includes conductors 33, 34, 35 and the shaped load lugs 19 depicted in phantom, encompass the corresponding Hall sensor 24 within the shaped radial extension 20 within each separate phase. Three miniature current transformers 36-38 are connected within each phase to provide operating power to input ports 14,15 of the trip unit circuit 32 by means of three separate bridge rectifiers 39-41, conductors 42, 43 and 44, diode D1, FET Q1 and capacitor Cl.

The conditioning circuit 45 connects between the Hall sensors 24 and the input ports I₁-I₃ of the trip unit and includes current limiting resistors R1-R6, feedback resistors R7, R9, R11 and ground resistors R8, R10, R12 connecting with the OP AMPs 46-48 in amplifying stage of the conditioning circuit. The OP AMPs 46-48 connect with OP AMPs 49-51 through limiting resistors R13-R15 and feed-back resistors R16-R18 in the rectification stage and the OP AMPs 52-57 connect the input ports I₁-I₃ of the trip unit 32 through feed back resistors R19-R21, R22-R24, rectifying diodes D2-D4 and conductors 55-57 to complete the inverter stage of the conditioning circuit 45.

The signals inputted from the Hall sensors 24 through the conditioning circuit 45 are processed within the trip unit circuit 32 to determine instantaneous, short time and long time overcurrent conditions in the manner described within the recent aforementioned US Patent 5,615,075 and a trip signal is outputted over conductor 60 to the gate of switching transistor Q2 to energize the trip solenoid 58 via output port 01. The cathode of Q2 connects with ground through conductor 61 and output port 02 to complete the circuit to the trip solenoid. The solenoid operates over the connector 59 to separate the contacts 14, 16 within each of the conductors 33-35 to interrupt the circuit within each pole.

A circuit breaker of reduced component size and expense has herein been disclosed whereby a Hall sensor and supplemental miniature current transformer within each phase of a multi-phase circuit is able to both power up the circuit breaker electronic trip unit as well as provide sample current to the trip unit without magnetic interference between the respective Hall sensors within adjoining phases.

## Claims

1. A load strap for circuit breakers employing an electronic trip unit, comprising:
a metallic strap (19) having means at one end adapted to connect with an electric circuit and means at an opposite end adapted to connect with an electronic trip circuit; **characterised by**
a shaped extension (20) formed on said metal strap intermediate said one end and said opposite end providing a magnetic flux concentrator; and
a Hall effect device (24) positioned within said shaped extension, the latter providing enhanced magnetic flux to said Hall effect device.

2. The load strap of claim 1 wherein said metallic strap defines a rectangular cross section.

3. The load strap of claim 1 wherein said shaped extension defines a radial configuration.

4. The load strap of claim 1 wherein said shaped extension provides external magnetic shielding to said Hall effect device

5. A circuit breaker comprising:
a case (11) and a cover (12),
a pair of separable electric contacts (14,16) within said case, said contacts being arranged for connection within an electric circuit;
a line strap at one end of said case, said line strap being connected with said pair of electric contacts and being arranged for connection with an electrical distribution circuit; **characterised by**
a load strap (19) at an opposite end of said case, said load strap being connected with said electric contacts and arranged for connection with an electric load, said load strap shaped to define a magnetic flux concentrator extension thereon;
an electronic trip unit circuit within said cover, said trip unit circuit being connected with said load strap for determining occurrence of an overcurrent condition and separating said electric contacts to interrupt said electric distribution circuit; and
a Hall effect device (24) within said magnetic flux concentrator for providing sample circuit current to said trip unit circuit.

6. The circuit breaker of claim 5 wherein said flux concentrator defines a shaped extension formed on said load strap intermediate one end and an opposite end thereof.

7. The circuit breaker of claim 5 wherein said load strap defines a rectangular cross section.

8. The circuit breaker of claim 5 wherein said shaped extension defines a radial configuration.

9. The circuit breaker of claim 5 wherein said shaped extension provides external magnetic shielding to said Hall effect device.

10. The circuit breaker of claim 5 including a conditioning circuit intermediate said Hall effect device and said trip unit.

11. The circuit breaker of claim 10 wherein said conditioning circuit includes an amplifier circuit.

12. The circuit breaker of claim 10 wherein said conditioning circuit includes a rectifier circuit.

13. The circuit breaker of claim 10 wherein said conditioning circuit includes an inverter circuit.

14. The circuit breaker of claim 10 further including a trip solenoid connecting with said trip unit circuit and said contacts for separating said contacts upon receipt of a trip signal from said trip unit circuit.

15. The circuit breaker of claim 14 further including a switching transistor intermediate said trip unit circuit and said trip solenoid for providing said trip signal to said trip solenoid upon receipt of a switching signal from said trip unit circuit.

## Patentansprüche

1. Lastverbindungsstück für Schutzschalter, die eine elektronische Auslöseeinheit verwenden, das aufweist:
ein metallenes Verbindungsstück (19) mit einer Einrichtung an einem Ende, die zur Verbindung mit einer elektrischen Schaltung eingerichtet ist, und mit einer Einrichtung an einem gegenüberliegenden Ende, die zur Verbindung mit einer elektronischen Auslöseschaltung eingerichtet ist; **gekennzeichnet durch**
eine an dem metallenen Verbindungsstück zwischen dem einen Ende und dem gegenüberliegenden Ende ausgebildete geformte Erweiterung (20), die einen Magnetflusskonzentrator bildet; und
eine Halleffektvorrichtung (24), die innerhalb der geformten Erweiterung angeordnet ist, wobei die Letztere einen verstärkten Magnetfluss für die Halleffektvorrichtung bereitstellt.

2. Lastverbindungsstück nach Anspruch 1, wobei das metallene Verbindungsstück einen rechteckigen Querschnitt aufweist.

3. Lastverbindungsstück nach Anspruch 1, wobei die geformte Erweiterung eine radiale Konfiguration aufweist.

4. Lastverbindungsstück nach Anspruch 1, wobei die geformte Erweiterung eine externe magnetische Abschirmung für die Halleffektvorrichtung bildet.

5. Schutzschalter, der aufweist:
ein Gehäuse (11) und eine Abdeckung (12);
ein Paar voneinander trennbarer elektrischer Kontakte (14, 16) innerhalb des Gehäuses, wobei die Kontakte zur Verbindung innerhalb einer elektrischen Schaltung eingerichtet sind;
ein Leitungsverbindungsstück an einem Ende des Gehäuses, wobei das Leitungsverbindungsstück mit dem elektrischen Kontaktpaar verbunden und dazu eingerichtet ist, mit einem elektrischen Verteilerkreis verbunden zu werden; **gekennzeichnet durch**
ein Lastverbindungsstück (19) an einem gegenüberliegenden Ende des Gehäuses, wobei das Lastverbindungsstück mit den elektrischen Kontakten verbunden und dazu eingerichtet ist, mit einer elektrischen Last verbunden zu werden, wobei das Lastverbindungsstück derart gestaltet ist, dass daran eine Magnetflusskonzentratorerweiterung gebildet ist;
eine elektronische Auslöseeinheitsschaltung innerhalb der Abdeckung, wobei die Auslöseeinheitsschaltung mit dem Lastverbindungsstück verbunden ist, um das Auftreten eines Überstromzustands festzustellen und die elektrischen Kontakte voneinander zu trennen, um den elektrischen Verteilerkreis zu trennen; und
eine Halleffektvorrichtung (24) innerhalb des Magnetflusskonzentrators zur Bereitstellung eines Schaltungsprüfstroms für die Auslöseeinheitsschaltung.

6. Schutzschalter nach Anspruch 5, wobei der Magnetflusskonzentrator eine geformte Erweiterung bildet, die an dem Lastverbindungsstück zwischen seinem einen Ende und seinem gegenüberliegenden Ende ausgebildet ist.

7. Schutzschalter nach Anspruch 5, wobei das Lastverbindungsstück einen rechteckigen Querschnitt aufweist.

8. Schutzschalter nach Anspruch 5, wobei die geformte Erweiterung eine radiale Konfiguration aufweist.

9. Schutzschalter nach Anspruch 5, wobei die geformte Erweiterung eine externe magnetische Abschirmung für die Halleffektvorrichtung bildet.

10. Schutzschalter nach Anspruch 5, der eine Konditionierungsschaltung zwischen der Halleffektvorrichtung und der Auslöseeinheit enthält.

11. Schutzschalter nach Anspruch 10, wobei die Konditionierungsschaltung eine Verstärkerschaltung enthält.

12. Schutzschalter nach Anspruch 10, wobei die Konditionierungsschaltung eine Gleichrichterschaltung enthält.

13. Schutzschalter nach Anspruch 10, wobei die Konditionierungsschaltung eine Inverterschaltung enthält.

14. Schutzschalter nach Anspruch 10, die ferner eine Auslösespule enthält, die mit der Auslöseeinheitsschaltung und den Kontakten verbunden ist, um beim Empfang eines Auslösesignals von der Auslöseeinheitsschaltung die Kontakte voneinander zu trennen.

15. Schutzschalter nach Anspruch 14, die ferner einen Schalttransistor zwischen der Auslöseeinheitsschaltung und der Auslösespule enthält, um der Auslösespule beim Empfang eines Schaltsignals von der Auslöseeinheitsschaltung das Auslösesignal zuzuführen.

## Revendications

1. Connexion de charge pour disjoncteurs employant une unité de déclenchement électronique, comprenant :
une connexion métallique (19) comportant un moyen à une extrémité adapté pour se connecter à un circuit électrique et un moyen à une extrémité opposée adapté pour se connecter à un circuit de déclenchement électronique ; **caractérisée par**
un prolongement profilé (20) formé sur ladite connexion métallique à mi-chemin entre ladite une extrémité et ladite extrémité opposée constituant un concentrateur de flux magnétique ; et
un dispositif à effet Hall (24) placé dans ledit prolongement profilé, ce dernier fournissant un flux magnétique optimisé audit dispositif à effet Hall.

2. Connexion de charge selon la revendication 1, dans laquelle ladite connexion métallique est de section rectangulaire.

3. Connexion de charge selon la revendication 1, dans laquelle ledit prolongement profilé définit une configuration radiale.

4. Connexion de charge selon la revendication 1, dans laquelle ledit prolongement profilé fournit un blindage magnétique extérieur audit dispositif à effet Hall.

5. Disjoncteur comprenant :
un boîtier (11) et un couvercle (12) ;
une paire de contacts électriques séparables (14, 16) à l'intérieur dudit boîtier, lesdits contacts étant adaptés pour être connectés dans un circuit électrique ;
une connexion de ligne à une extrémité dudit boîtier, ladite connexion de ligne étant connectée à ladite paire de contacts électriques et étant adaptée pour être connectée à un circuit de distribution électrique ; **caractérisé par**
une connexion de charge (19) à une extrémité opposée dudit boîtier, ladite connexion de charge étant connectée avec lesdits contacts électriques et adaptée pour être connectée à une charge électrique, ladite connexion de charge ayant une forme destinée à définir dessus un prolongement de concentrateur de flux magnétique ;
un circuit d'unité de déclenchement électronique dans ledit couvercle, ledit circuit d'unité de déclenchement étant connecté à ladite connexion de charge pour déterminer l'apparition d'une condition de surintensité et séparer lesdits contacts électriques pour ouvrir ledit circuit de distribution électrique ; et
un dispositif à effet Hall (24) dans ledit concentrateur de flux magnétique pour fournir du courant de circuit échantillon audit circuit d'unité de déclenchement.

6. Disjoncteur selon la revendication 5, dans lequel ledit concentrateur de flux définit un prolongement profilé formé sur ladite connexion de charge à mi-chemin d'une extrémité et d'une extrémité opposée de celle-ci.

7. Disjoncteur selon la revendication 5, dans lequel ladite connexion de charge est de section rectangulaire.

8. Disjoncteur selon la revendication 5, dans lequel ledit prolongement profilé définit une configuration radiale.

9. Disjoncteur selon la revendication 5, dans lequel ledit prolongement profilé fournit un blindage magnétique extérieur audit dispositif à effet Hall.

10. Disjoncteur selon la revendication 5, comprenant un circuit de conditionnement entre ledit dispositif à effet Hall et ladite unité de déclenchement.

11. Disjoncteur selon la revendication 10, dans lequel ledit circuit de conditionnement comprend un circuit amplificateur.

12. Disjoncteur selon la revendication 10, dans lequel ledit circuit de conditionnement comprend un circuit redresseur.

13. Disjoncteur selon la revendication 10, dans lequel ledit circuit de conditionnement comprend un circuit onduleur.

14. Disjoncteur selon la revendication 10, comprenant en outre un solénoïde de déclenchement qui se connecte audit circuit d'unité de déclenchement et auxdits contacts pour séparer lesdits contacts lors de la réception d'un signal de déclenchement provenant dudit circuit d'unité de déclenchement.

15. Disjoncteur selon la revendication 14, comprenant en outre un transistor de commutation entre ledit circuit d'unité de déclenchement et ledit solénoïde de déclenchement pour fournir ledit signal de déclenchement audit solénoïde de déclenchement lors de la réception d'un signal de commutation provenant dudit circuit d'unité de déclenchement.
